# EUROPEAN PATENT APPLICATION

(11) **EP 4 292 892 A1**
(43) Date of publication of application: **20.12.2023**
(21) Application number: 21933801.9
(22) Date of filing: 31.03.2021
(51) Int. Cl.: B60T 13/00

(54) **HYDRAULIC BRAKE APPARATUS, AND VEHICLE**

(71) Applicant: Huawei Technologies Co., Ltd., Shenzhen, Guangdong 518129 (CN)
(72) Inventor: JIA, Guangxin, Shenzhen, Guangdong 518129 (CN); LU, Yuhao, Shenzhen, Guangdong 518129 (CN); ZHANG, Yongsheng, Shenzhen, Guangdong 518129 (CN)
(74) Representative: Huawei European IPR
(86) International application number: PCT/CN2021/084573
(87) International publication number: WO 2022/205133

(57) **Abstract**

This application provides a hydraulic braking apparatus and a vehicle. The hydraulic braking apparatus may be applied to a vehicle, such as an intelligent vehicle, a new energy vehicle, a connected vehicle, or an intelligent driving vehicle. The hydraulic braking apparatus includes: a first hydraulic block 10; a master cylinder assembly 110, disposed in the first hydraulic block 10, where the master cylinder assembly 110 includes a pushrod 111, a piston 112, a primary rubber cup 113 of the piston 112, and a secondary rubber cup 114 of the piston 112, and the piston 112 is connected to the pushrod 111; a permanent magnet 120, disposed inside the piston 112; and a stroke sensor 130, disposed between the primary rubber cup 113 and the secondary rubber cup 114 and configured to detect movement of the permanent magnet 120 to determine an amount of movement of the piston 112. According to the solutions of this application, a distance between the stroke sensor and the permanent magnet can be relatively short, to ensure signal accuracy of the stroke sensor.

## Description

### TECHNICAL FIELD

This application relates to the field of vehicles, and more particularly to a hydraulic braking apparatus and a vehicle.

### BACKGROUND

A braking system of a vehicle is a system that applies specific braking force to wheels of the vehicle, so as to brake the wheels forcibly to some degree. The braking system enables a running vehicle to forcibly decelerate or even stop as required by a driver or a controller, enables a stopped vehicle to park stably under various road conditions (for example, on a ramp), or enables a vehicle driven downhill to maintain a stable speed.

As a popular braking system, an electro-hydraulic braking (electro-hydraulic brake, EHB) system usually includes a hydraulic braking apparatus. The hydraulic braking apparatus usually includes a master cylinder assembly, a stroke sensor, a permanent magnet, and the like. The master cylinder assembly is used to convert input force of a pushrod into hydraulic pressure, the permanent magnet moves with the pushrod to make a magnetic field change at the stroke sensor, and the stroke sensor senses the change to output an electrical signal. It should be noted that a distance (air gap) between the permanent magnet and the stroke sensor has great impact on magnetic field strength at the stroke sensor. A larger air gap is more unfavorable for ensuring signal accuracy of the sensor.

Therefore, how to set positions of the permanent magnet and the stroke sensor to ensure signal accuracy of the sensor is a problem that needs to be resolved urgently.

### SUMMARY

This application provides a hydraulic braking apparatus and a vehicle, to ensure signal accuracy of a stroke sensor.

According to a first aspect, a hydraulic braking apparatus is provided. The hydraulic braking apparatus includes: a first hydraulic block 10; a master cylinder assembly 110, disposed in the first hydraulic block 10, where the master cylinder assembly 110 includes a pushrod 111, a piston 112, a primary rubber cup 113 of the piston 112, and a secondary rubber cup 114 of the piston 112, and the piston 112 is connected to the pushrod 111; a permanent magnet 120, disposed inside the piston 112; and a stroke sensor 130, disposed between the primary rubber cup 113 and the secondary rubber cup 114 and configured to detect movement of the permanent magnet 120 to determine an amount of movement of the piston 112.

In the hydraulic braking apparatus provided in this embodiment of this application, the permanent magnet is disposed inside the piston 112, and the stroke sensor is disposed between the primary rubber cup and the secondary rubber cup of the piston, so that a distance (air gap) between the stroke sensor and the permanent magnet is relatively short, to ensure signal accuracy of the sensor.

With reference to the first aspect, in some implementations of the first aspect, a blind hole 11 is disposed in the first hydraulic block 10 and between the primary rubber cup 113 and the secondary rubber cup 114, and the stroke sensor 130 is disposed in the blind hole 11.

With reference to the first aspect, in some implementations of the first aspect, the braking apparatus further includes a sheath 160, disposed outside the piston 112, fastened on the first hydraulic block 10, and configured to limit the piston 112.

In the hydraulic braking apparatus provided in this embodiment of this application, there may be the sheath outside the piston, configured to limit the piston.

With reference to the first aspect, in some implementations of the first aspect, the permanent magnet 120 is fastened inside the piston 112; and the braking apparatus further includes: an anti-rotation mechanism 170, configured to fasten the piston 112 to the sheath 160, so as to prevent the piston 112 and therefore the permanent magnet 120 from rotating around respective axes of the piston 112 and the permanent magnet 120, thereby avoiding a magnetic field change caused by the rotation of the permanent magnet 120 around the axis thereof.

In the hydraulic braking apparatus provided in this embodiment of this application, the piston may have the anti-rotation mechanism, and the anti-rotation mechanism is configured to fasten the piston to the sheath. Because the sheath is fastened on the first hydraulic block and the permanent magnet is disposed inside the piston, the magnetic field change caused by rotation of the permanent magnet around the axis of the permanent magnet can be avoided, ensuring signal accuracy.

With reference to the first aspect, in some implementations of the first aspect, the anti-rotation mechanism 170 includes: an anti-rotation member 171, fastened at an end of a side that is of the piston 112 and that is close to the pushrod 111; an anti-rotation groove 172, disposed in the anti-rotation member 171; and an anti-rotation rib 173, disposed in the sheath 160, where the anti-rotation rib 173 is a protrusion of the sheath 160, and the anti-rotation groove 172 fits the anti-rotation rib 173.

With reference to the first aspect, in some implementations of the first aspect, the braking apparatus further includes solenoid valves 140, and a distance between the solenoid valve 140 and the stroke sensor 130 is greater than or equal to a target threshold.

It should be understood that, the target threshold can prevent magnetic flux leaked by the solenoid valve 140 from affecting a magnetic field at the stroke sensor.

In this embodiment of this application, the distance between the solenoid valve and the stroke sensor is greater than or equal to the target threshold, so that the magnetic flux leaked by the solenoid valve does not affect the magnetic field at the stroke sensor, to ensure signal stability of the sensor.

With reference to the first aspect, in some implementations of the first aspect, the braking apparatus further includes a second hydraulic block 20, and the solenoid valve 140 is disposed on the second hydraulic block 20.

In this embodiment of this application, the solenoid valve is disposed on the second hydraulic block to stay away from the stroke sensor. In this way, the magnetic flux leaked by the solenoid valves does not affect the magnetic field at the stroke sensor, to ensure signal stability of the sensor.

With reference to the first aspect, in some implementations of the first aspect, the stroke sensor 130 includes a sensor chip 131 and a sensor substrate 132, and the braking apparatus further includes a control substrate 150, where the control substrate 150 is electrically connected to the solenoid valve 140 and the sensor substrate 132 separately.

According to a second aspect, an electro-hydraulic brake-by-wire system is provided, including the hydraulic braking apparatus according to any one of the first aspect or any possible implementation of the first aspect.

According to a third aspect, a vehicle is provided, including the hydraulic braking apparatus according to any one of the first aspect or any possible implementation of the first aspect.

### BRIEF DESCRIPTION OF DRAWINGS

FIG. 1 is a partial sectional view of an example of a hydraulic braking apparatus according to an embodiment of this application;
FIG. 2 is an example diagram of a three-dimensional structure of a hydraulic braking apparatus according to an embodiment of this application;
FIG. 3 is an example diagram of a position and a structure of a sheath according to an embodiment of this application; and
FIG. 4 is an example diagram of a three-dimensional structure of an anti-rotation mechanism according to an embodiment of this application.

### DESCRIPTION OF EMBODIMENTS

In an existing hydraulic braking apparatus, a permanent magnet is disposed inside a piston (a piston connected to a pushrod), and a stroke sensor is disposed inside a housing of a control unit of the hydraulic braking apparatus. There is a long distance (air gap) between the permanent magnet and the stroke sensor because of intervals between the permanent magnet and the stroke sensor such as a piston wall thickness, a rubber cup height, a wall thickness of a master cylinder housing, and a structural part of the sensor, thereby affecting signal accuracy of the sensor.

In view of this, this application provides a hydraulic braking apparatus. In the hydraulic braking apparatus, a permanent magnet is disposed inside a piston connected to a pushrod, and a stroke sensor is disposed between a primary rubber cup and a secondary rubber cup of the piston, so that a distance between the permanent magnet and the stroke sensor can be shortened, to further ensure signal accuracy of the stroke sensor.

The following describes technical solutions of this application with reference to the accompanying drawings.

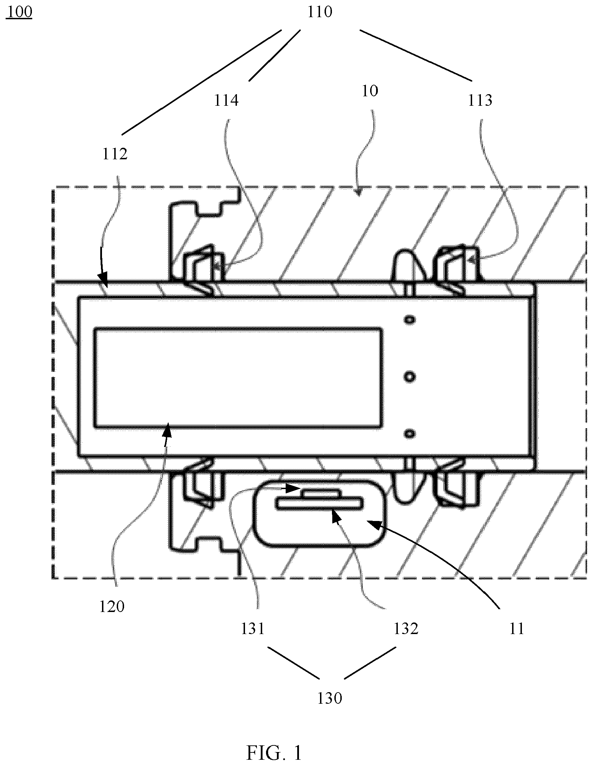

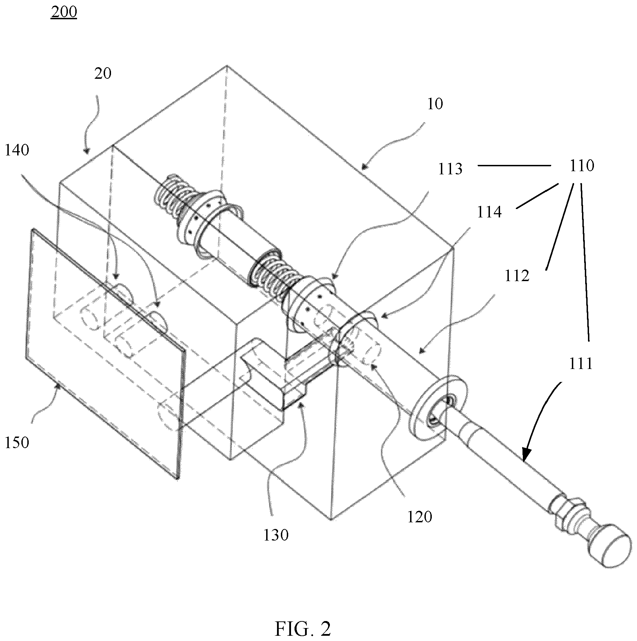

FIG. 1 is a partial sectional view of an example of a hydraulic braking apparatus according to an embodiment of this application. It should be understood that FIG. 1 may be a partial sectional view of FIG. 2. As shown in FIG. 1, a hydraulic braking apparatus 100 includes a first hydraulic block 10, a master cylinder assembly 110, a permanent magnet 120, and a stroke sensor 130.

The master cylinder assembly 110 is disposed in the first hydraulic block 10, and the master cylinder assembly 110 includes a pushrod 111 (not shown in FIG. 1, and referring to FIG. 2), a piston 112, a primary rubber cup 113 of the piston 112, and a secondary rubber cup 114 of the piston. The piston 112 is connected to the pushrod 111. Therefore, the piston 112 may also be referred to as a primary piston or a pushrod piston. It should be further understood that the piston described below is the piston 112.

The permanent magnet 120 is disposed inside the piston 112.

The stroke sensor 130 is disposed between the primary rubber cup 113 and the secondary rubber cup 114, and is configured to detect movement of the permanent magnet 120 to determine an amount of movement of the piston 112.

Optionally, a blind hole 11 is disposed in the first hydraulic block 10 and between the primary rubber cup 113 and the secondary rubber cup 114, and the stroke sensor 130 is disposed in the blind hole 11, as shown in FIG. 1. This means that the stroke sensor 130 may be enclosed in the first hydraulic block 10. In addition, because the stroke sensor 130 in this application is separately located in the blind hole in the first hydraulic block 10, the stroke sensor 130 needs to be protected in an actual operation.

Optionally, the stroke sensor 130 may be a hall effect sensor or a sensor of another type. This is not limited in this application.

It should be understood that, in a process in which the hydraulic braking apparatus works, the permanent magnet 120 moves with the pushrod 111 so that a magnetic field changes at the stroke sensor 130, and the stroke sensor 130 senses the change and outputs an electrical signal.

In the hydraulic braking apparatus provided in this embodiment of this application, the permanent magnet is disposed inside a piston (the piston is the piston 112), and the stroke sensor is disposed between the primary rubber cup and secondary rubber cup of the piston, so that a distance (air gap) between the stroke sensor and the permanent magnet is relatively short, to ensure signal accuracy of the sensor.

It should be understood that the hydraulic braking apparatus usually needs to be integrated with an apparatus that generates large magnetic flux leakage, such as a solenoid valve. When the solenoid valve is relatively close to the stroke sensor, magnetic flux leaked by the solenoid valve affects a magnetic field at the stroke sensor, thereby affecting signal stability of the stroke sensor.

Therefore, optionally, the braking apparatus 100 may further include solenoid valves 140 (refer to FIG. 2). A distance between the solenoid valve 140 and the stroke sensor 130 is greater than or equal to a target threshold.

It should be understood that the target threshold can prevent the magnetic flux leaked by the solenoid valve 140 from affecting the magnetic field at the stroke sensor.

It should be understood that the solenoid valve 140 may be disposed on the first hydraulic block 10 or another hydraulic block, provided that the distance between the solenoid valve 140 and the stroke sensor 130 is greater than or equal to the target threshold and the magnetic flux leaked by the solenoid valve does not affect the magnetic field at the stroke sensor. For ease of description, in the following description, the solenoid valve 140 disposed on another hydraulic block, for example, a second hydraulic block 20 (refer to FIG. 2) is used as an example for description.

Optionally, the stroke sensor 130 includes a sensor chip 131 and a sensor substrate 132.

The braking apparatus 100 may further include a control substrate 150 (refer to FIG. 2). The control substrate 150 is electrically connected to the solenoid valve 140 and the sensor substrate 132 separately.

Based on the foregoing description, FIG. 2 is used as an example to describe in detail a structure of a hydraulic braking apparatus provided in this application. It should be understood that FIG. 2 is merely an example and does not constitute a limitation on this application.

FIG. 2 is an example diagram of a three-dimensional structure of a hydraulic braking apparatus according to an embodiment of this application. As shown in FIG. 2, the hydraulic braking apparatus 200 includes: a first hydraulic block 10, a second hydraulic block 20, a master cylinder assembly 110, a permanent magnet 120, a stroke sensor 130, solenoid valves 140, and a control substrate 150.

The master cylinder assembly 110 is disposed in the first hydraulic block 10. The master cylinder assembly 110 includes a pushrod 111, a piston 112, a primary rubber cup 113 of the piston 112, and a secondary rubber cup 114 of the piston 112. The piston 112 is connected to the pushrod 111. The permanent magnet 120 is disposed inside the piston 112. The stroke sensor 130 is disposed between the primary rubber cup 113 and the secondary rubber cup 114, and is configured to detect movement of the permanent magnet 120 to determine an amount of movement of the piston 112. The solenoid valve 140 is disposed on the second hydraulic block 20 to stay away from the stroke sensor 130. The control substrate 150 is electrically connected to the solenoid valve 140 and the stroke sensor 130 separately.

It should be understood that an electrical connection between the control substrate 150 and the stroke sensor 130 actually means an electrical connection between the control substrate 150 and the sensor substrate 132 of the stroke sensor 130.

In the hydraulic braking apparatus provided in FIG. 2, the permanent magnet is disposed inside the piston, the stroke sensor is disposed between the primary rubber cup and secondary rubber cup of the piston, and the solenoid valve is disposed on the second hydraulic block and is away from the stroke sensor. Therefore, a distance (air gap) between the stroke sensor and the permanent magnet is shortened, so that signal accuracy of the sensor can be ensured. In addition, magnetic flux leaked by the solenoid valve does not affect a magnetic field at the stroke sensor, so that signal stability of the sensor can be ensured.

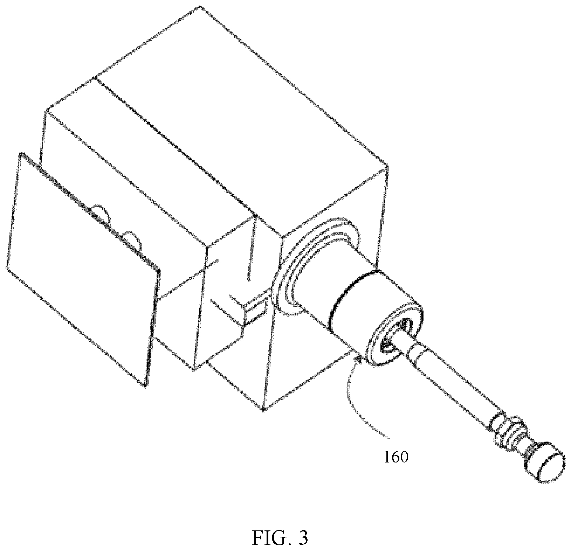

Optionally, a sheath 160 may be disposed outside the piston 112 of the hydraulic braking apparatuses 100 and 200 provided in this application, as shown in FIG. 3. The sheath 160 is configured to limit the piston 112. The sheath 160 is fastened on the first hydraulic block 10.

It should be understood that the permanent magnet 120 in the hydraulic braking apparatuses 100 and 200 provided in this application needs to be fastened inside the piston 112, to prevent relative motion between the permanent magnet 120 and the piston 112. It should be understood that a manner for fastening the permanent magnet 120 in the piston 112 is not limited in this application.

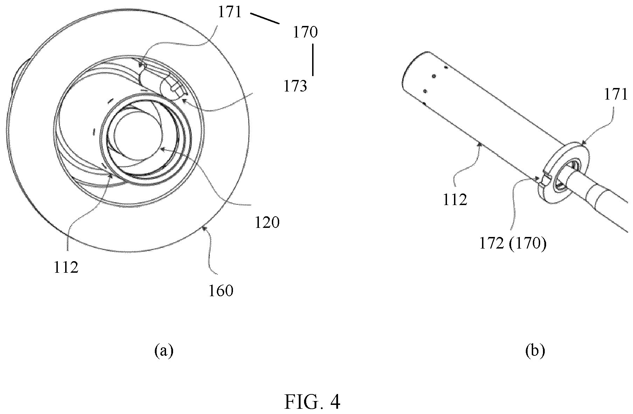

Optionally, the piston 112 of the hydraulic braking apparatuses 100 and 200 provided in this application may further have an anti-rotation mechanism 170 (refer to FIG. 4), and the anti-rotation mechanism 170 generally may be disposed on a sheath portion outside the piston 112. The anti-rotation mechanism 170 is configured to fasten the piston 112 to the sheath 160, so as to prevent the piston 112 and therefore the permanent magnet 120 from rotating around respective axes of the piston 112 and the permanent magnet 120, thereby avoiding a magnetic field change caused by the rotation of the permanent magnet 120 around the axis thereof.

The following describes structure design of the anti-rotation mechanism 170 with reference to FIG. 4.

FIG. 4 is an example diagram of a three-dimensional structure of an anti-rotation mechanism according to an embodiment of this application. As shown in (a) in FIG. 4, the anti-rotation mechanism 170 includes an anti-rotation member 171, an anti-rotation groove 172, and an anti-rotation rib 173. The anti-rotation member 171 is fastened to the fastened piston 112, and is disposed at an end of a side that is of the piston 112 and that is close to the pushrod 111. The anti-rotation groove 172 is disposed in the anti-rotation member 171, as shown in (b) in FIG. 4. The anti-rotation rib 173 is disposed in a sheath 160, as shown in (a) in FIG. 4. The anti-rotation groove 172 fits the anti-rotation rib 173.

It should be understood that the anti-rotation rib 173 is a protrusion of the sheath 160, as shown in (a) in FIG. 4. The anti-rotation groove 172 fitting the anti-rotation rib 173 means that the anti-rotation rib 173 may be stuck in the anti-rotation groove 172. After the anti-rotation groove 172 and the anti-rotation rib 173 fit each other, relative rotation motion cannot be performed.

It should be further understood that, in an actual operation, the sheath 160 needs to be fastened on a first hydraulic block 10.

In the anti-rotation mechanism provided in this application, the anti-rotation member is fastened on the piston (which means that the anti-rotation mechanism is fastened on the piston), the anti-rotation mechanism is disposed on a sheath portion outside the piston (which means that the anti-rotation mechanism is also fastened on the sheath), and the sheath is fastened on the first hydraulic block, so that the piston does not rotate around the axis of the piston. In addition, the permanent magnet is fastened in the piston, so that the permanent magnet does not rotate around the axis of the permanent magnet. In this way, a magnetic field change caused by rotation of the permanent magnet around the axis of the permanent magnet can be avoided, ensuring signal accuracy.

An embodiment of this application provides an electro-hydraulic brake-by-wire system. The electro-hydraulic braking system includes the foregoing hydraulic braking apparatus. The hydraulic braking apparatus is connected to a braking operation member in the electro-hydraulic brake-by-wire system, and is configured to generate braking hydraulic pressure based on an action amount of the braking operation member.

It should be understood that the electro-hydraulic brake-by-wire system may be applied to a vehicle and the braking operation member may be a foot pedal of the vehicle. This is not limited in this application. When applied in a vehicle, the hydraulic braking apparatus is connected to a foot pedal of the vehicle, and is configured to generate braking hydraulic pressure based on an action amount of the foot pedal, to control stable driving of the vehicle.

An embodiment of this application further provides a vehicle, including the foregoing hydraulic braking apparatus or the foregoing electro-hydraulic brake-by-wire system. It should be understood that the vehicle may be an electric vehicle, for example, a pure electric vehicle, an extended range electric vehicle, a hybrid electric vehicle, a fuel cell vehicle, or a new energy vehicle. This is not specifically limited in this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A hydraulic braking apparatus, comprising:
a first hydraulic block (10);
a master cylinder assembly (110), disposed in the first hydraulic block (10), wherein the master cylinder assembly (110) comprises a pushrod (111), a piston (112), a primary rubber cup (113) of the piston (112), and a secondary rubber cup (114) of the piston (112), and the piston (112) is connected to the pushrod (111);
a permanent magnet (120), disposed inside the piston (112); and
a stroke sensor (130), disposed between the primary rubber cup (113) and the secondary rubber cup (114), and configured to detect movement of the permanent magnet (120) to determine an amount of movement of the piston (112).

2. The braking apparatus according to claim 1, wherein a blind hole (11) is disposed on the first hydraulic block (10) and between the primary rubber cup (113) and the secondary rubber cup (114), and the stroke sensor (130) is disposed in the blind hole (11).

3. The braking apparatus according to claim 1 or 2, wherein the braking apparatus further comprises:
a sheath (160), disposed outside the piston (112), fastened on the first hydraulic block (10), and configured to limit the piston (112).

4. The braking apparatus according to claim 3, wherein the permanent magnet (130) is fastened in the piston (112), and the braking apparatus further comprises:
an anti-rotation mechanism (170), configured to fasten the piston (112) to the sheath (160), so as to prevent the piston (112) and therefore the permanent magnet (120) from rotating around respective axes of the piston (112) and the permanent magnet (120), thereby avoiding a magnetic field change caused by the rotation of the permanent magnet (120) around the axis thereof.

5. The braking apparatus according to claim 4, wherein the anti-rotation mechanism (170) comprises:
an anti-rotation member (171), fastened at an end of a side that is of the piston (112) and that is close to the pushrod (111);
an anti-rotation groove (172), disposed in the anti-rotation member (171); and
an anti-rotation rib (173), disposed in the sheath (160), wherein the anti-rotation rib (173) is a protrusion of the sheath (160); and
the anti-rotation groove (172) fits the anti-rotation rib (173).

6. The braking apparatus according to any one of claims 1 to 5, wherein the braking apparatus further comprises:
solenoid valves (140), wherein a distance between the solenoid valve (140) and the stroke sensor (130) is greater than or equal to a target threshold.

7. The braking apparatus according to claim 6, wherein the braking apparatus further comprises:
a second hydraulic block (20), wherein the solenoid valve (140) is disposed on the second hydraulic block (20).

8. The braking apparatus according to claim 6 or 7, wherein the stroke sensor (130) comprises a sensor chip (131) and a sensor substrate (132); and the braking apparatus further comprises:
a control substrate (150), wherein the control substrate (150) is electrically connected to the solenoid valve (140) and the sensor substrate (132) separately.

9. An electro-hydraulic brake-by-wire system, comprising the hydraulic braking apparatus according to any one of claims 1 to 8.

10. A vehicle, comprising the hydraulic braking apparatus according to any one of claims 1 to 8.
